# EUROPEAN PATENT SPECIFICATION

(11) **EP 4 311 172 B1**
(45) Date of publication and mention of the grant of the patent: **17.09.2025**
(21) Application number: 22783852.1
(22) Date of filing: 16.03.2022
(51) Int. Cl.: H04L 12/28

(54) **TRAFFIC FORWARDING METHOD AND APPARATUS**
VERFAHREN UND VORRICHTUNG ZUR VERKEHRSWEITERLEITUNG
PROCÉDÉ ET APPAREIL D'ACHEMINEMENT DE TRAFIC

(30) Priority: 09.04.2021 CN 202110385388
(43) Date of publication of application: 24.01.2024
(73) Proprietor: Huawei Technologies Co., Ltd., Shenzhen, Guangdong 518129 (CN)
(72) Inventor: LI, Wenyan, Shenzhen, Guangdong 518129 (CN); WANG, Haibo, Shenzhen, Guangdong 518129 (CN); WANG, Lili, Shenzhen, Guangdong 518129 (CN); LI, Lei, Shenzhen, Guangdong 518129 (CN); DONG, Lin, Shenzhen, Guangdong 518129 (CN); WANG, Cuijun, Shenzhen, Guangdong 518129 (CN)
(74) Representative: Maiwald GmbH
(86) International application number: PCT/CN2022/081280
(87) International publication number: WO 2022/213783

(56) References cited:
- EP-A1- 2 680 515
- CN-A- 101 035 080
- CN-A- 101 222 486
- CN-A- 102 724 109
- US-A1- 2010 172 237
- UTTARO AT&T E CHEN CISCO SYSTEMS B DECRAENE ORANGE J SCUDDER JUNIPER NETWORKS J: "Support for Long-lived BGP Graceful Restart; draft-ietf-idr-long-lived-gr-00.txt", 5 September 2019 (2019-09-05), pages 1 - 25, XP015134983, Retrieved from the Internet <URL:https://tools.ietf.org/html/draft-ietf-idr-long-lived-gr-00> [retrieved on 20190905]

## Description

### TECHNICAL FIELD

Embodiments of this application relate to the field of communication technologies, and in particular, to a traffic forwarding method and an apparatus.

### BACKGROUND

Graceful restart (graceful restart, GR) is a redundancy technique for fault tolerance that ensures uninterrupted forwarding services when a device in a network is restarted, and is widely used in scenarios such as active/standby device switchover and system upgrade.

In a network, a device that is restarted by a fault or actively triggers restart is referred to as a restart device. A device that establishes a protocol connection with the restart device is referred to as a neighbor device. When the restart device enters a restart state, the neighbor device adds an invalid identifier to routing information that points to the restart device and that is in a local routing table (that is, routing information received from the restart device) and retains the routing information. If the restart device is started normally within predetermined time, the neighbor device re-establishes a neighbor relationship with the restart device, and receives a route update message from the restart device. If the routing information of the restart device does not change, the neighbor device deletes the foregoing invalid identifier in the routing information to which the invalid identifier is added, and continues to use the routing information to forward traffic to the restart device. If the restart device is unsuccessfully started normally within predetermined time (that is, a GR time limit), the neighbor device deletes the routing information with the invalid identifier from the local routing table, and the neighbor device does not forward traffic to the restart device.

However, during the foregoing GR, in a process in which the restart device is restarted, the neighbor device continues to forward traffic by using the routing information with the invalid identifier, which causes some traffic loss. In addition, if the restart device cannot be restarted within the foregoing predetermined time, and the neighbor device keeps forwarding traffic by using the routing information with the invalid identifier, a large amount of traffic loss occurs, and a routing black hole is generated. The EP 2 680 515 A1 refers to selectively invoking graceful restart procedures when a route reflector member of a redundant route cluster fails.

### SUMMARY

Embodiments of this application provide a traffic forwarding method and an apparatus, to reduce traffic loss and improve network reliability. The invention is set out in the appended set of claims.

According to the invention, when the restart device in the network enters the restart state, the neighbor device updates, from the first routing information to the second routing information, the routing information used to forward the target traffic, so that the neighbor device does not forward the traffic by using invalid first routing information, but forwards the traffic by using the second routing information. This can reduce traffic loss, avoid traffic black holes, and improve network reliability.

In a possible implementation, a method in which the neighbor device adjusts a priority of the first routing information and/or a priority of the second routing information specifically includes: The neighbor device adds identification information to the first routing information. The identification information indicates that the first routing information is routing information with a low priority.

In this embodiment of this application, the neighbor device adjusts the priority of the first routing information to the lowest, so that the neighbor device forwards the traffic by using second routing information with a highest priority. It is assumed that in a process in which the neighbor device forwards the target traffic based on the second routing information, a next-hop device of the neighbor device enters the restart state, and the neighbor device needs to update the routing information again. Specifically, the neighbor device selects routing information from routing information other than the second routing information based on the priority of the routing information. Because the priority of the first routing information is adjusted to the lowest, the neighbor device does not select the invalid first routing information, thereby preventing, when a peer end of the neighbor device (that is, a next hop of the neighbor device) enters the restart state, generation of a routing black hole caused by traffic loss because the neighbor device selects the invalid first routing information to forward the traffic.

### BRIEF DESCRIPTION OF DRAWINGS

FIG. 1 is a first schematic diagram of a BGP network according to an embodiment of this application;
FIG. 2 is a first schematic diagram of hardware of a traffic forwarding device according to an embodiment of this application;
FIG. 3 is a second schematic diagram of hardware of a traffic forwarding device according to an embodiment of this application;
FIG. 4 is a first schematic diagram of a traffic forwarding method according to an embodiment of this application;
FIG. 5 is a second schematic diagram of a traffic forwarding method according to an embodiment of this application;
FIG. 6 is a third schematic diagram of a traffic forwarding method according to an embodiment of this application;
FIG. 7 is a fourth schematic diagram of a traffic forwarding method according to an embodiment of this application;
FIG. 8 is a fifth schematic diagram of a traffic forwarding method according to an embodiment of this application;
FIG. 9 is a first schematic diagram of a structure of a traffic forwarding device according to an embodiment of this application;
FIG. 10 is a second schematic diagram of a structure of a traffic forwarding device according to an embodiment of this application;
FIG. 11 is a first schematic diagram of a route notification method according to an embodiment of this application;
FIG. 12 is a first schematic diagram of a structure of a route notification device according to an embodiment of this application; and
FIG. 13 is a second schematic diagram of a structure of a route notification device according to an embodiment of this application.

### DESCRIPTION OF EMBODIMENTS

The term "and/or" in this specification is merely an association relationship for describing associated objects, and represents that three relationships may exist. For example, A and/or B may represent the following three cases: Only A exists, both A and B exist, and only B exists.

In the specification and claims of embodiments of this application, the terms "first", "second", and the like are used to distinguish between different objects, but are not used to describe a specific order of the objects. For example, first routing information, second routing information, and the like are used to distinguish between different routing information, but are not used to describe a specific order of the routing information, or a first parameter and a second parameter are used to distinguish between different parameters, but are not used to describe a specific order of the parameters.

In embodiments of this application, the terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a relative concept in a specific manner.

In descriptions of embodiments of this application, unless otherwise stated, "a plurality of" means two or more. For example, a plurality of processing units refer to two or more processing units. A plurality of systems refer to two or more systems.

Some concepts involved in a traffic forwarding method and an apparatus provided in embodiments of this application are first explained and described.

Graceful restart (GR) is a technology that ensures uninterrupted forwarding services during active/standby switchover or protocol restart, and is widely used in scenarios such as active/standby device switchover and system upgrade.

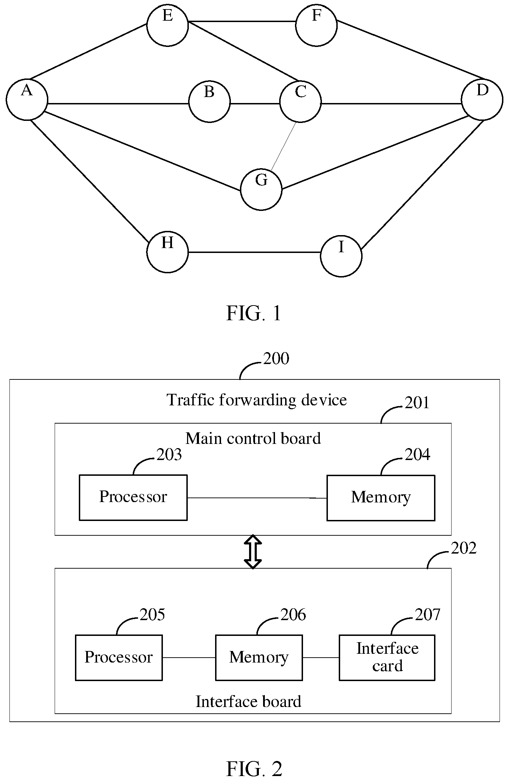

In GR scenarios, in a network, a device that is restarted by a fault or actively triggers restart is referred to as a restart device, and a device that establishes a protocol connection with the restart device is referred to as a neighbor device. For example, refer to a network architecture shown in FIG. 1. Target traffic is sent from a device A to a device D. It is assumed that a forwarding path of the target traffic is A→B→C→D, and the device B in the network needs to be restarted. In this case, the device B is a restart device, and the device A is a neighbor device. The core content of a GR technology is that in a process in which the restart device B is restarted, the neighbor device A retains routing information that points to the restart device B and that is in a local routing table. After the restart device B is normally started within predetermined time, the restart device B re-establishes a neighbor relationship with the neighbor device A, and sends route update information to the neighbor device A. If the restart device B cannot be restarted, the neighbor device A deletes related routing information and does not forward traffic.

Based on an existing problem in the background, an embodiment of this application provides a traffic forwarding method. When a restart device in a network enters a restart state, a neighbor device updates, from first routing information to second routing information, routing information used to forward target traffic, and forwards the target traffic based on the second routing information, to reduce traffic loss and improve network reliability.

In this embodiment of this application, an apparatus configured to perform the traffic forwarding method is referred to as a traffic forwarding device. The traffic forwarding device may be a switching device or a routing device, for example, a switch or a router. It may be understood that hardware structures of the switching device and the routing device are similar. In this embodiment of this application, a router is used as an example to describe a hardware structure of the traffic forwarding device.

FIG. 2 is a schematic diagram of hardware of a router provided in an embodiment of this application. As shown in FIG. 2, a router 200 includes a main control board 201 and an interface board 202. The main control board 201 includes a processor 203 and a memory 204. The interface board 202 includes a processor 205, a memory 206, and an interface card 207. The processor 203 of the main control board 201 is configured to invoke program instructions in the memory 204 of the main control board 201 to perform a corresponding processing function. The processor 205 of the interface board 202 is configured to invoke program instructions in the memory 206 of the interface board 202 to perform receiving and sending of a packet.

The main control board 201 is configured to deploy a routing protocol and calculation of routing information. For example, a BGP protocol is deployed on the main control board 201. The interface board 202 is configured to query a routing table on a device or forward traffic. After the calculation of routing information is completed on the main control board 201, optimal routing information is advertised to the interface board 202, and the interface board 202 uses the optimal routing information to guide forwarding of traffic.

The processor 203 or the processor 205 includes one or more central processing units (central processing unit, CPU). The CPU may be a single-core CPU (single-core CPU) or a multi-core CPU (multi-core CPU).

The memory 204 or the memory 206 includes but is not limited to a random access memory (random access memory, RAM), a read only memory (read only memory, ROM), an erasable programmable read-only memory (erasable programmable read-only memory, EPROM), a flash memory, an optical memory, or the like. The memory 204 stores code and data of an operating system. For example, data stored in the memory 204 may include information of a routing protocol or routing information, and data stored in the memory 206 may include candidate routing information. This is not specifically limited in this embodiment of this application.

Optionally, the processor 203 implements the traffic forwarding method provided in this embodiment of this application by reading instructions stored in the memory 204. In a case that the processor 203 implements the method in the foregoing embodiment by reading the instructions stored in the memory 204, the memory 204 stores instructions for implementing the traffic forwarding method provided in this embodiment of this application. The processor 205 reads routing information stored in the memory 206, to implement traffic forwarding.

The interface card 207 is a wired interface (port), such as a fiber distributed data interface (fiber distributed data interface, FDDI), or a gigabit ethernet (gigabit ethernet, GE) interface. Alternatively, the interface card 207 is a wireless interface. It should be understood that the interface card 207 includes a plurality of physical ports, and the interface card 207 is configured to forward traffic, receive a route update message, and the like.

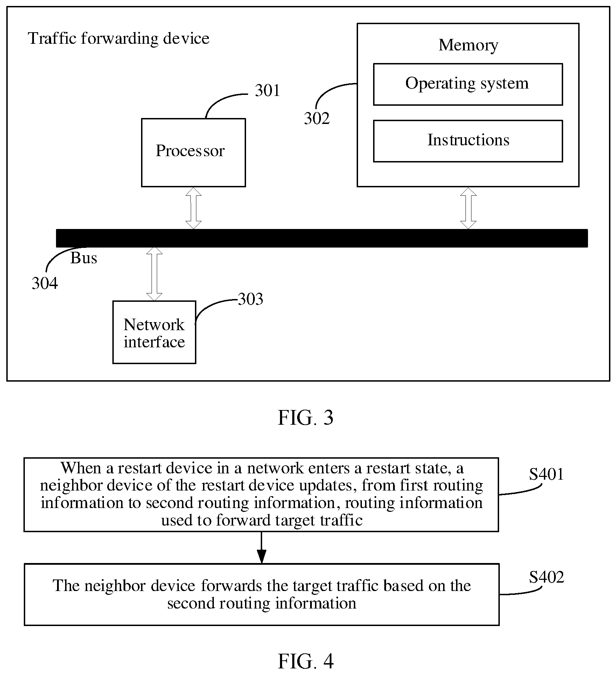

For example, FIG. 3 is a schematic diagram of another hardware of a router provided in an embodiment of this application. As shown in FIG. 3, the router includes a processor 301, a memory 302, and a network interface 303.

The processor 301 includes one or more CPUs. The CPU may be a single-core CPU (single-core CPU) or a multi-core CPU (multi-core CPU).

The memory 302 includes but is not limited to a RAM, a ROM, an EPROM, a flash memory, an optical memory, or the like. The memory 302 stores code and data of an operating system. For example, data stored in the memory 302 may include data such as a local routing table and a routing attribute. This is not specifically limited in this embodiment of this application.

Optionally, the processor 301 implements the traffic forwarding method provided in embodiments of this application by reading instructions stored in the memory 302, or the processor 301 implements the traffic forwarding method provided in embodiments of this application by using internally stored instructions. In a case that the processor 301 implements the method in the foregoing embodiment by reading the instructions stored in the memory 302, the memory 302 stores instructions for implementing the traffic forwarding method provided in this embodiment of this application.

The network interface 303 is a wired interface (port), such as an FDDI or a GE interface. Alternatively, the network interface 303 is a wireless interface. It should be understood that the network interface 303 includes a plurality of physical ports, and the network interface 303 is configured to forward traffic, receive a route update message, and the like.

Optionally, the traffic forwarding device further includes a bus 304. The foregoing processor 301, the memory 302, and the network interface 303 are usually connected to each other through the bus 304, or are connected to each other in another manner.

It should be understood that the GR technology is applied to networks of different communication protocols, for example, may be applied to networks in which communication is based on a border gateway protocol (border gateway protocol, BGP) or an interior gateway protocol (interior gateway protocol, IGP). In this embodiment of this application, a BGP is used as an example to describe a traffic forwarding method.

As shown in FIG. 4, an embodiment of this application provides a traffic forwarding method. The method includes S401 and S402.

S401: When a restart device in a network enters a restart state, a neighbor device of the restart device updates, from first routing information to second routing information, routing information used to forward target traffic.

The first routing information indicates the neighbor device to send the target traffic to the restart device, and the second routing information indicates the neighbor device to send the target traffic to another device.

It should be understood that the foregoing target traffic is traffic sent from a start node to a destination node. For example, in FIG. 1, a device A is a start node, a device D is a destination node, traffic forwarded from the device A to the device D is the target traffic, and the target traffic may be data or a message. This is not limited in this embodiment of this application.

In this embodiment of this application, a specific device (referred to as a restart device) in a network enters a restart state. In a process in which the restart device is restarted, the restart device cannot continue to forward traffic, and a device (referred to as a neighbor device) that establishes a communication connection with the restart device updates routing information of the traffic. That is, the neighbor device updates a forwarding path of the target traffic.

For example, with reference to the network architecture shown in FIG. 1, the target traffic is forwarded from the device A to the device D. It is assumed that the target traffic is forwarded through a forwarding path A→B→C→D. If all devices on the forwarding path run normally, for the device A, after the device A receives the target traffic, the device A forwards the target traffic to a next-hop device B of the device A based on the first routing information. If the device B on the forwarding path is restarted, the device A updates the routing information used to forward the target traffic, in other words, updates, from the first routing information to the second routing information, the routing information used to forward the target traffic. Optionally, with reference to FIG. 1, the second routing information may be routing information indicating to send the target traffic to a device E, or the second routing information may be routing information indicating to send the target traffic to a device G, or the second routing information may be routing information indicating to send the target traffic to a device H. Specifically, this is determined based on an actual situation. This is not limited in this embodiment of this application.

S402: The neighbor device forwards the target traffic based on the second routing information.

In a process in which the restart device is restarted, the neighbor device updates the routing information used to forward the target traffic, and forwards the target traffic based on updated routing information, in other words, the neighbor device updates a forwarding path of the target traffic, does not forward the target traffic by using the restart device, but forwards the target traffic by using another device. In this way, traffic loss can be reduced in the process in which the restart device is restarted. For example, based on the foregoing example, when the device B enters the restart state, the device A updates, to the routing information indicating to send the target traffic to the device G, the routing information used to forward the target traffic. In this way, the device A forwards the target traffic to D through the device G, that is, the forwarding path of the target traffic is updated to A→G→D.

In conclusion, according to the traffic forwarding method provided in this embodiment of this application, when the restart device in the network enters the restart state, the neighbor device does not forward the target traffic by using invalid routing information (that is, the foregoing first routing information), but updates the routing information used to forward the target traffic (updates to the second routing information), and forwards the target traffic based on new routing information, to reduce traffic loss in a GR process, and improve network reliability.

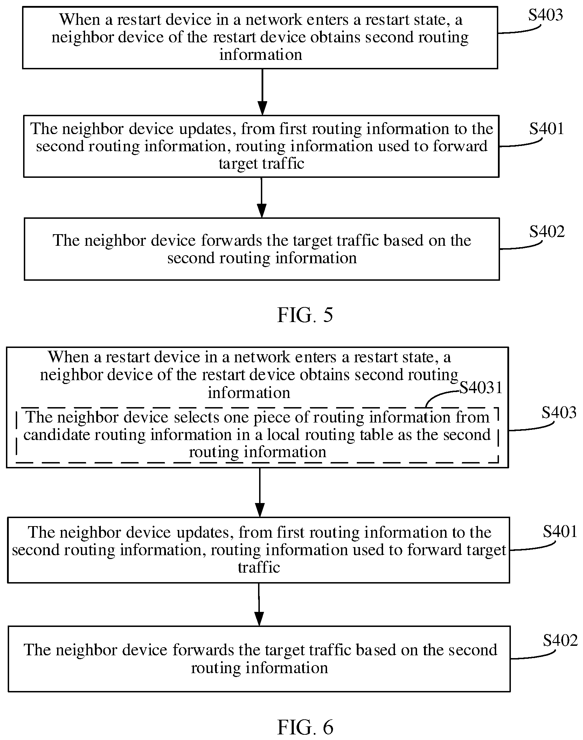

Optionally, with reference to FIG. 4, as shown in FIG. 5, when the restart device in the network enters the restart state, before the neighbor device of the restart device updates, from the first routing information to the second routing information, the routing information used to forward the target traffic, the traffic forwarding method provided in this embodiment of this application further includes S403.

S403: The neighbor device of the restart device obtains the second routing information.

Optionally, with reference to FIG. 5, as shown in FIG. 6, S403 may be implemented through S4031.

S4031: The neighbor device selects one piece of routing information from candidate routing information in a local routing table as the second routing information.

The candidate routing information is routing information used to forward the target traffic, and the candidate routing information does not include the first routing information.

Optionally, in this embodiment of this application, a method in which the neighbor device selects one piece of routing information from candidate routing information in a local routing table as the second routing information specifically includes: selecting routing information with a highest priority in the candidate routing information in the local routing table as the second routing information.

It should be understood that in this embodiment of this application, when forwarding traffic, the traffic forwarding device in the foregoing network may select, based on a priority of the routing information, the routing information with the highest priority to forward the target traffic.

In this embodiment of this application, when the target traffic is sent from the start device A to the destination device D, the traffic is forwarded through a forwarding node between the device A and the device D. Refer to FIG. 1. Optionally, the forwarding path from the device A to the device D may include a plurality of paths. For example, the forwarding path from the device A to the device D may include four paths, as shown in Table 1.

**Table 1**

| Forwarding path | Devices included in the forwarding path in sequence |
|---|---|
| 1 | A→E→C→D |
| 2 | A→B→C→D |
| 3 | A→G→D |
| 4 | A→H→I→D |

Based on the foregoing Table 1, routing information of a device A is routing information indicating the device A to forward traffic to a next-hop device of the device A. It is assumed that, in the four forwarding paths obtained in the foregoing Table 1, routing information indicating the device A to send traffic to a device E is routing information 1, routing information indicating the device A to send traffic to a device B is routing information 2, routing information indicating the device A to send traffic to a device G is routing information 3, and routing information indicating the device A to send traffic to a device H is routing information 4. The foregoing four pieces of routing information in descending order of priorities are the routing information 2, the routing information 3, the routing information 1, and the routing information 4. The first routing information is the routing information 2, and the candidate routing information may include the routing information 1, the routing information 3, and the routing information 4.

If the restart device is the device B, the neighbor device is the device A, and the device B is in a normal state, the forwarding path of the target traffic is A→B→C→D. When the device B is restarted, the neighbor device A determines the routing information 3 with a highest priority in the candidate routing information as the second routing information, that is, the forwarding path of the target traffic is updated to A→G→D.

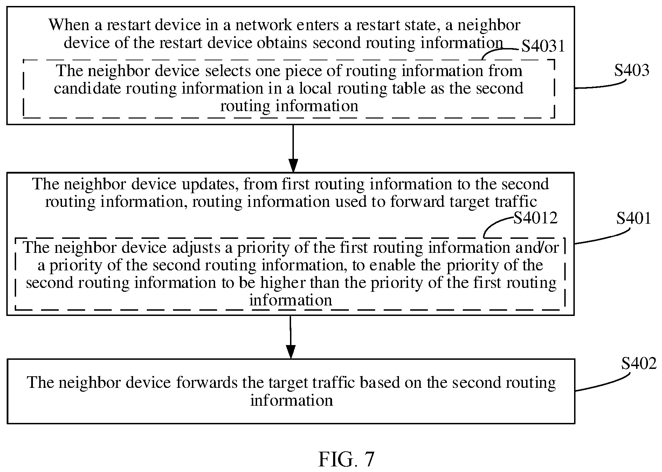

Optionally, with reference to FIG. 6, as shown in FIG. 7, the foregoing step S401 may be implemented through S4012.

S4012: The neighbor device adjusts a priority of the first routing information and/or a priority of the second routing information, to enable the priority of the second routing information to be higher than the priority of the first routing information.

Optionally, in this embodiment of this application, the neighbor device may adjust the priority of the routing information in any one of manners in which the priority of the first routing information is adjusted, or the priority of the second routing information is adjusted, or the priority of the first routing information is adjusted and the priority of the second routing information is adjusted, to enable the priority of the second routing information to be higher than the priority of the first routing information, and then the neighbor device forwards traffic by using routing information with a higher priority.

In this embodiment of this application, it is assumed that a higher priority value of the routing information indicates a higher priority of the routing information. With reference to the foregoing S4031, for example, if the restart device is the device B, and the neighbor device is the device A, a priority value of the first routing information is 5, and a priority value of the second routing information is 4. Optionally, the neighbor device may modify the priority value of the first routing information to 3, and does not modify the priority value of the second routing information. In this way, after adjustment, the priority value of the first routing information is 3, and the priority value of the second routing information is 4. Alternatively, the neighbor device modifies the priority value of the second routing information to 6, and does not modify the priority value of the first routing information. In this way, after adjustment, the priority value of the first routing information is 5, and the priority value of the second routing information is 6. Alternatively, the neighbor device modifies the priority value of the first routing information to 2, and modifies the priority value of the second routing information to 3, to enable the priority of the second routing information to be higher than the priority of the first routing information.

Optionally, in an implementation, a manner in which the neighbor device adjusts the priority of the first routing information may be: The neighbor device adjusts the priority of the first routing information to the lowest.

In this embodiment of this application, the neighbor device adjusts the priority of the first routing information to the lowest, so that the neighbor device forwards the traffic by using second routing information with a highest priority. It is assumed that in a process in which the neighbor device forwards the target traffic based on the second routing information, a next-hop device of the neighbor device enters the restart state, and the neighbor device needs to update the routing information again. Specifically, the neighbor device selects routing information from routing information other than the second routing information based on the priority of the routing information. Because the priority of the first routing information is adjusted to the lowest, the neighbor device does not select the invalid first routing information, thereby preventing, when a peer end of the neighbor device (that is, a next hop of the neighbor device) enters the restart state, generation of a routing black hole caused by traffic loss because the neighbor device selects the invalid first routing information to forward the traffic.

In conclusion, with reference to the examples in FIG. 1 and Table 1, it is assumed that a larger priority value of the routing information indicates a higher priority of the routing information. In Table 1, the routing information indicating the device A to send the traffic to the device E is the routing information 1, and a priority value of the routing information 1 is 3. The routing information indicating the device A to send the traffic to the device B is the routing information 2, and a priority value of the routing information 2 is 6. The routing information indicating the device A to send the traffic to the device G is the routing information 3, and a priority value of the routing information 3 is 5. The routing information indicating the device A to send the traffic to the device H is the routing information 4, and a priority value of the routing information 4 is 1.

If the forwarding path of the target traffic is A→B→C→D, when the device B is restarted and enters the restart state, the device A (the neighbor device) updates, from the routing information 2 (that is, the first routing information) to the routing information 3 (that is, the second routing information), the routing information used to forward the target traffic. If the neighbor device modifies the priority value of the routing information 2 (where an initial priority value of the first routing information is 6) to 4, the priority of the routing information 3 (where the priority value of the routing information 3 is 5) is higher than the priority of the routing information 2. Therefore, the neighbor device A forwards traffic by using the routing information 3, that is, the forwarding path of the target traffic is updated to A→G→D.

In a process in which the neighbor device forwards the target traffic based on the routing information 3, when the device G enters the restart state, the neighbor device A updates the routing information again, and the neighbor device selects routing information with a highest priority from routing information other than the routing information 3. To be specific, the neighbor device selects the routing information with the highest priority from the routing information 1 (whose priority value is 3), the routing information 2 (whose priority value is 4), and the routing information 4 (whose priority value is 1). It can be seen that the neighbor device selects the routing information 2, and the neighbor device forwards the target traffic based on the routing information 2. However, the device B is unsuccessfully restarted at this time. If the device A forwards the traffic based on the routing information 2, traffic loss may occur, and a traffic black hole is generated.

To avoid a problem of traffic loss caused by reselecting the routing information 2, when the device B enters the restart state, the device A (the neighbor device) updates, from the routing information 2 (that is, the first routing information) to the routing information 3 (that is, the second routing information), the routing information used to forward the target traffic, and the neighbor device A adjusts the priority of the first routing information to the lowest. In a subsequent process in which the neighbor device forwards traffic by using the second routing information, even if the device G also enters the restart state, because the priority of the first routing information is lower than that of the routing information 1 and that of the routing information 4, the neighbor device does not select the routing information 2 when the neighbor device A updates the routing information again, to prevent traffic loss caused by forwarding the traffic by using the routing information 2 again.

In an implementation, the foregoing method in which the priority of the routing information is adjusted may be: The neighbor device modifies a value of a first parameter corresponding to the first routing information and/or a value of a first parameter corresponding to the second routing information, to enable the priority of the second routing information to be higher than the priority of the first routing information.

The first parameter is any one of a multi exit discriminator (multi exit discriminator, MED) parameter, a protocol preference value (pref value, Pref-val) parameter, an autonomous system path (autonomous system path, AS-Path) parameter, or the like.

It should be understood that the foregoing first parameter indicates the priority of the routing information. A larger value of the MED parameter indicates a lower priority of the routing information. A smaller value of the Pref-val parameter indicates a lower priority of the routing information. A larger quantity of forwarding nodes corresponding to the AS-Path parameter indicates a lower priority of the routing information.

For example, the neighbor device may modify a value of a MED parameter in the first routing information to a maximum value of the parameter, so that the priority of the first routing information is the lowest.

In an implementation, the foregoing method in which the priority of the routing information is adjusted may be: The neighbor device adds identification information to the first routing information. The identification information indicates that the priority of the first routing information is the lowest.

Optionally, a method in which the neighbor device adds identification information to the first routing information specifically includes: The neighbor device adds an extended value to a community attribute parameter (Community) or an extended community attribute parameter (ext community, Ext-Community) in the first routing information. When a value corresponding to the Community parameter or the Ext-Community parameter in the routing information is the added value, the priority of the routing information is the lowest.

For example, a value of the Community parameter includes 0xFFFFFF01, 0xFFFFFF02, or 0xFFFFFF03, and an extended value of the Community parameter may be OxFFFFFF 10. When the restart device enters the restart state, the neighbor device updates the value of the Community parameter in the first routing information to OxFFFFFF 10, to indicate that the priority of the first routing information is the lowest.

Optionally, after the neighbor device updates, from the first routing information to the second routing information, the routing information used to forward the target traffic (in other words, sets the priority of the second routing information to be higher than the priority of the first routing information), the neighbor device sends a notification message to a neighbor device of the neighbor device. The notification message indicates that the priority of the second routing information is higher than the priority of the first routing information. In this way, when routing information on a specific traffic forwarding device in the network changes, routing information on a neighbor device of the traffic forwarding device can be synchronously updated.

It should be understood that the foregoing notification message may include information such as an updated priority of the first routing information or an updated priority of the second routing information. This is not specifically limited in this embodiment of this application.

It should be understood that after the foregoing neighbor device sends the notification message to the neighbor device of the neighbor device, if the neighbor device of the neighbor device is not a start device for sending the target traffic, after receiving the notification message, the neighbor device of the neighbor device continues to send the notification message to a neighbor device of the neighbor device of the neighbor device, and so on, until the notification message is sent to the start device of the target traffic.

For example, it is assumed that the forwarding path of the target traffic is A→B→C→D→E. When a device D on the forwarding path enters the restart state, a neighbor device of the device D, that is, a device C, sends traffic through a path C→G→E. In this case, the device C sends a notification message to a neighbor device of the device C, that is, a device B. Because the device B is not the start device for forwarding the target traffic, after receiving the notification message, the device B sends the notification message to a neighbor device of the device B, that is, a device A. Because the device A is the start device for forwarding the target traffic, after the device A receives the notification message, a process of sending the notification message ends.

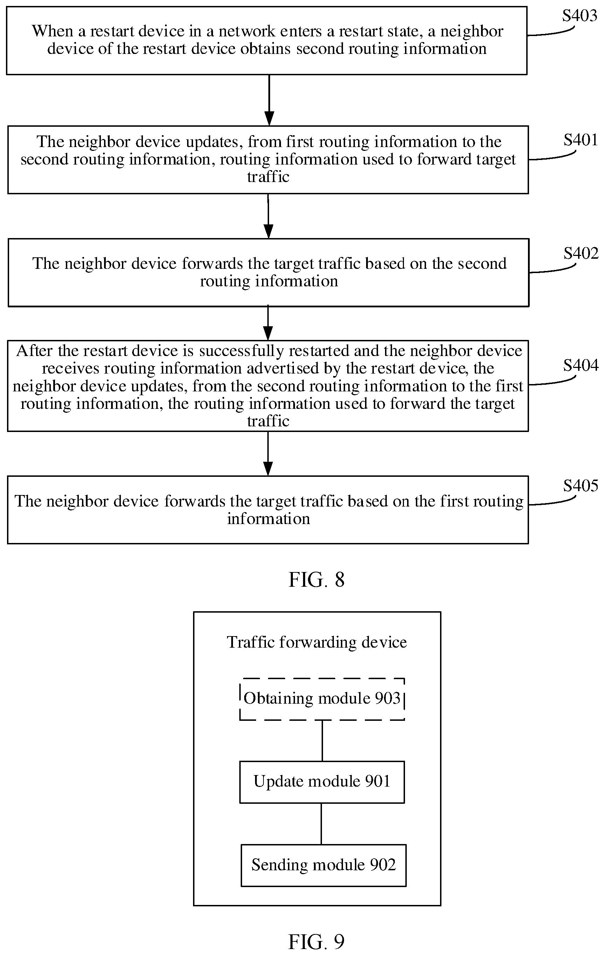

Optionally, with reference to FIG. 4 or FIG. 5, as shown in FIG. 8, the traffic forwarding method provided in this embodiment of this application further includes S404 and S405.

S404: After the restart device is successfully restarted and the neighbor device receives routing information advertised by the restart device, the neighbor device updates, from the second routing information to the first routing information, the routing information used to forward the target traffic.

The "after the restart device in the network is successfully restarted and the neighbor device receives routing information advertised by the restart device" means "after the restart device is successfully restarted and establishes a neighbor relationship with the neighbor device".

It should be understood that in a case that after the restart device is successfully restarted, the neighbor device receives the routing information advertised by the restart device, and routing information on the restart device changes, the neighbor device may update, from the second routing information to the first routing information, the routing information used to forward the target traffic. Because the first routing information is optimal routing information when the restart device is in a normal state, switching the routing information to the first routing information and forwarding the target traffic based on the first routing information can ensure that the traffic is forwarded by using the optimal routing information.

Optionally, in this embodiment of this application, a method in which the neighbor device updates, from the second routing information to the first routing information, the routing information used to forward the target traffic may include: The neighbor device adjusts the priority of the first routing information and/or adjusts the priority of the second routing information, to enable the priority of the second routing information to be higher than the priority of the first routing information.

It should be noted that, in step 404, a method in which the priority of the first routing information is adjusted and/or the priority of the second routing information is adjusted is similar to S4012 in the foregoing embodiment. For descriptions of step 404, refer to the descriptions of S4012 in the foregoing embodiment. Details are not described herein again.

For example, with reference to FIG. 1 and Table 1, it is assumed that a larger priority value of the routing information indicates a higher priority of the routing information. In the foregoing Table 1, the routing information indicating the device A to send the traffic to the device E is the routing information 1, and a priority of the routing information 1 is 3. The routing information indicating the device A to send the traffic to the device B is the routing information 2, and a priority of the routing information 2 is 6. The routing information indicating the device A to send the traffic to the device G is the routing information 3, and a priority of the routing information 3 is 5. The routing information indicating the device A to send the traffic to the device H is the routing information 4, and a priority of the routing information 4 is 1.

If the forwarding path of the target traffic is A→B→C→D, when the device B is restarted and enters the restart state, the device A (the neighbor device) updates, from the routing information 2 (that is, the first routing information) to the routing information 3 (that is, the second routing information), the routing information used to forward the target traffic. It is assumed that the neighbor device modifies the priority value of the routing information 2 (where the initial priority value of the routing information 2 is 6) to 4, and the priority value of the routing information 3 remains unchanged (where the priority value of the routing information 3 is 5). In this way, the forwarding path of the target traffic is updated to A→G→D. If the device B is successfully restarted, the neighbor device modifies the priority value of the routing information 2 to 6, to enable the priority of the routing information 2 to be higher than the priority of the routing information 3, thereby switching the forwarding path of the target traffic to A→B→C→D.

S405: The neighbor device forwards the target traffic based on the first routing information.

In conclusion, this embodiment of this application provides a traffic forwarding method. When a restart device in a network enters a restart state, a neighbor device updates, from first routing information to second routing information, routing information used to forward target traffic, and the neighbor device forwards the target traffic based on the second routing information. The first routing information indicates the neighbor device to send the target traffic to the restart device, and the second routing information indicates the neighbor device to send the target traffic to another device. According to the traffic forwarding method provided in this embodiment of this application, when the neighbor device enters the restart state, the neighbor device does not forward the traffic by using invalid routing information (that is, the first routing information), but re-obtains a piece of optimal routing information (that is, the second routing information) for forwarding the traffic. This can reduce traffic loss, avoid traffic black holes, and improve network reliability. In addition, after the restart device is successfully restarted, the neighbor device updates, from the second routing information to the first routing information, the routing information used to forward the target traffic, to ensure that the traffic is forwarded based on the optimal routing information.

Correspondingly, an embodiment of this application provides a traffic forwarding device. The traffic forwarding device is configured to perform the steps in the foregoing traffic forwarding method. In this embodiment of this application, the traffic forwarding device may be divided into function modules according to the foregoing method example, for example, may be divided into function modules corresponding to respective functions. Alternatively, two or more functions may be integrated into one processing module. A foregoing integrated module may be implemented in a form of hardware, or may be implemented in a form of a software function module. The module division in this embodiment of this application is an example, and is merely logical function division. Another division manner in an actual implementation may exist.

In a case in which the traffic forwarding device is divided into function modules corresponding to respective functions, FIG. 9 shows a schematic diagram of a possible structure of a traffic forwarding device involved in the foregoing embodiment. As shown in FIG. 9, the traffic forwarding device includes an update module 901 and a sending module 902.

The update module 901 is configured to: when a restart device in a network enters a restart state, update, from first routing information to second routing information, routing information used to forward target traffic, for example, perform step S401 in the foregoing method embodiment.

The sending module 902 is configured to forward the target traffic based on the second routing information, for example, perform step S402 in the foregoing method embodiment.

Optionally, the traffic forwarding device provided in this embodiment of this application further includes an obtaining module 903. The obtaining module 903 is configured to obtain the second routing information, for example, perform step S403 in the foregoing method embodiment.

Optionally, the foregoing obtaining module 903 is specifically configured to select one piece of routing information from candidate routing information in a local routing table as the second routing information, for example, perform step S4031 in the foregoing method embodiment.

Optionally, the traffic forwarding device provided in this embodiment of this application further includes an update module 901. The update module 901 is specifically configured to adjust a priority of the first routing information and/or a priority of the second routing information, to enable the priority of the second routing information to be higher than the priority of the first routing information, for example, perform step S4012 in the foregoing method embodiment.

Optionally, the foregoing update module 901 is specifically configured to modify a value of a first parameter corresponding to the first routing information and/or a value of a first parameter corresponding to the second routing information.

Optionally, the traffic forwarding device provided in this embodiment of this application further includes an update module 901. The update module 901 is specifically configured to add identification information to the first routing information. The identification information indicates that the first routing information is routing information with a low priority.

Optionally, the update module 901 is specifically configured to extend a value of a second parameter corresponding to the first routing information. An extended value of the second parameter is the identification information added in the first routing information.

Optionally, the foregoing sending module 902 is further configured to send a notification message to a neighbor device of the neighbor device. The notification message indicates that the priority of the second routing information is higher than the priority of the first routing information.

Optionally, the update module 901 is specifically configured to: after the restart device is successfully restarted and the neighbor device receives routing information advertised by the restart device, update, from the second routing information to the first routing information, the routing information used to forward the target traffic, for example, perform step S404 in the foregoing method embodiment.

The foregoing sending module 902 is further configured to forward the target traffic based on the first routing information, for example, perform step S405 in the foregoing method embodiment.

Each module of the foregoing traffic forwarding device may be further configured to perform other actions in the foregoing method embodiment. All related content of the steps involved in the foregoing method embodiment may be applied to function descriptions of corresponding function modules. Details are not described herein again.

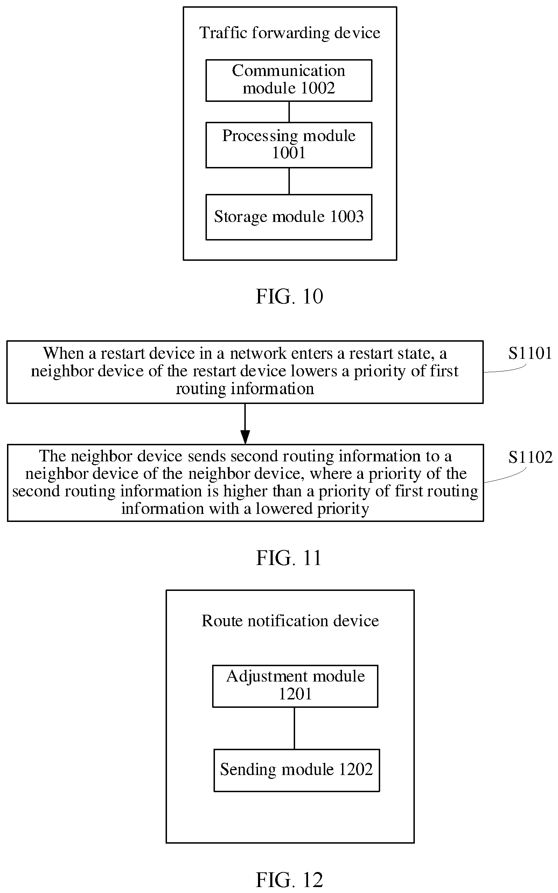

In a case in which an integrated unit is used, a schematic diagram of a structure of a traffic forwarding device provided in an embodiment of this application is shown in FIG. 10. In FIG. 10, a traffic forwarding device includes a processing module 1001 and a communication module 1002. The processing module 1001 is configured to control and manage an action of the traffic forwarding device, for example, perform the steps performed by the foregoing obtaining module 903 and the update module 901, and/or is configured to perform another process of the technology described in this specification. The communication module 1002 is configured to support interaction between the traffic forwarding device and another device, for example, perform the steps performed by the foregoing sending module 902. As shown in FIG. 10, the traffic forwarding device may further include a storage module 1003. The storage module 1003 is configured to store program code, local routing information, and the like of the traffic forwarding device.

The processing module 1001 may be a processor or a controller, for example, a processor 301 in FIG. 3. The communication module 1002 may be a transceiver, an RF circuit, a communication interface, or the like, for example, a bus 304 and/or a network interface 303 in FIG. 3. The storage module 1003 may be a memory, for example, a memory 302 in FIG. 3.

As shown in FIG. 11, an embodiment of this application provides a route notification method. The method includes S1101 and S1102.

S1101: When a restart device in a network enters a restart state, a neighbor device of the restart device lowers a priority of first routing information.

The first routing information indicates the neighbor device to send target traffic to the restart device.

It should be understood that a method in which a neighbor device of the restart device lowers a priority of first routing information is similar to that in S4012. Details are not described herein again.

S1102: The neighbor device sends second routing information to a neighbor device of the neighbor device, where a priority of the second routing information is higher than a priority of first routing information with a lowered priority.

The second routing information indicates the neighbor device to send the target traffic to another device.

Optionally, the neighbor device may further send a lowered priority of the first routing information and/or the priority of the second routing information to the neighbor device of the neighbor device.

It should be understood that after the neighbor device sends the second routing information to the neighbor device of the neighbor device, if the neighbor device of the neighbor device is not a start device for sending the target traffic, after receiving the second routing information, the neighbor device of the neighbor device continues to send the second routing information to a neighbor device of the neighbor device of the neighbor device, and so on, until the second routing information is sent to the start device of the target traffic.

For example, a forwarding path of the target traffic is A→B→C→D→E. When a device D on the forwarding path enters a restart state, a neighbor device C of the device D lowers a priority of first routing information corresponding to a forwarding path C→D→E, and sends traffic by using second routing information corresponding to the path C→G→E. In this case, the neighbor device C sends the second routing information to a neighbor device B of the neighbor device C. In this case, the neighbor device B of the neighbor device C is not a start device of the target traffic. Therefore, after receiving the second routing information, the device B sends the second routing information to a neighbor device A of the neighbor device B. In this case, the device A is the start device of the target traffic. Therefore, after the neighbor device A of the device B receives the second routing information, a process of sending the second routing information ends.

This embodiment of this application provides a route notification method. When a restart device in a network enters a restart state, a neighbor device of the restart device lowers a priority of first routing information, and then the neighbor device sends second routing information to a neighbor device of the neighbor device. A priority of the second routing information is higher than a priority of first routing information with a lowered priority. In this way, when routing information on a specific traffic forwarding device in the network changes, routing information on a neighbor device of the traffic forwarding device can be synchronously updated.

Correspondingly, an embodiment of this application provides a route notification device. The route notification device is configured to perform the steps in the foregoing route notification method. In this embodiment of this application, the route notification device may be divided into function modules according to the foregoing method example, for example, may be divided into function modules corresponding to respective functions. Alternatively, two or more functions may be integrated into one processing module. A foregoing integrated module may be implemented in a form of hardware, or may be implemented in a form of a software function module. The module division in this embodiment of this application is an example, and is merely logical function division. Another division manner in an actual implementation may exist.

In a case in which the route notification device is divided into function modules corresponding to respective functions, FIG. 12 shows a schematic diagram of a possible structure of the route notification device involved in the foregoing embodiment. As shown in FIG. 12, the route notification device includes an adjustment module 1201 and a sending module 1202.

The adjustment module 1201 is configured to enable, when a restart device in a network enters a restart state, a neighbor device of the restart device to lower a priority of first routing information. For example, the adjustment module is configured to perform step S1101 in the foregoing method embodiment.

The sending module 1202 is configured to enable the neighbor device to send second routing information to a neighbor device of the neighbor device, where a priority of the second routing information is higher than a priority of first routing information with a lowered priority. For example, the sending module is configured to perform step S1102 in the foregoing method embodiment.

Each module of the foregoing route notification device may be further configured to perform other actions in the foregoing method embodiment. All related content of the steps involved in the foregoing method embodiment may be applied to function descriptions of corresponding function modules. Details are not described herein again.

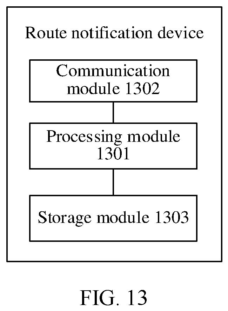

In a case in which an integrated unit is used, a schematic diagram of a structure of a route notification device provided in an embodiment of this application is shown in FIG. 13. In FIG. 13, the route notification device includes a processing module 1301 and a communication module 1302. The processing module 1301 is configured to control and manage an action of the route notification device, for example, perform the step performed by the foregoing adjustment module 1201, and/or is configured to perform another process of the technology described in this specification. The communication module 1302 is configured to support interaction between the route notification device and another device, for example, perform the step performed by the sending module 1202. As shown in FIG. 13, the route notification device may further include a storage module 1303. The storage module 1303 is configured to store program code, local routing information, and the like of the route notification device.

The processing module 1301 may be a processor or a controller, for example, a processor 301 in FIG. 3. The communication module 1302 may be a transceiver, an RF circuit, a communication interface, or the like, for example, a bus 304 and/or a network interface 303 in FIG. 3. The storage module 1303 may be a memory, for example, a memory 302 in FIG. 3.

All or a part of the foregoing embodiments may be implemented by software, hardware, firmware, or any combination thereof. When a software program is used to implement embodiments, all or a part of embodiments may be implemented in a form of a computer program product. The computer program product includes one or more computer instructions. When the computer instructions are loaded and executed on a computer, all or a part of procedures or functions in embodiments of this application are generated. The computer may be a general-purpose computer, a dedicated computer, a computer network, or another programmable apparatus. The computer instruction may be stored in a computer-readable storage medium, or be transmitted from one computer-readable storage medium to another computer-readable storage medium. For example, the computer instruction may be transmitted from one website site, computer, server, or data center to another website site, computer, server, or data center by wire (such as coaxial cable, optical fiber, or digital subscriber line (digital subscriber line, DSL)) or wireless (such as infrared, wireless, or microwave). The computer-readable storage medium may be any available medium that can be accessed by a computer, or a data storage device including such as a server and a data center integrated with one or more available media. The available medium may be a magnetic medium (such as a floppy disk, a magnetic disk, or a magnetic tape), an optical medium (such as digital video disc (DVD)), a semiconductor medium (such as a solid-state drive (solid-state drive, SSD)), or the like.

The foregoing descriptions about implementations allow a person skilled in the art to understand that, for the purpose of convenient and brief description, division into the foregoing function modules is used as an example for illustration. In practical application, the foregoing functions may be allocated to and completed by different function modules as required. In other words, an inner structure of an apparatus is divided into different function modules, to implement all or some of the functions described above. For a detailed working process of the foregoing described system, apparatus, and unit, refer to a corresponding process in the foregoing method embodiments. Details are not described herein again.

In the several embodiments provided in this application, it should be understood that the disclosed system, apparatus, and method may be implemented in other manners. For example, embodiments of the foregoing described apparatus are merely examples. For example, division of the modules or units is merely logical function division and may be another division in an actual implementation. For example, a plurality of units or components may be combined or integrated into another system, or some features may be ignored or be not performed. In addition, the mutual coupling or direct coupling or communication connection presented or discussed may be implemented through some interfaces. The indirect coupling or communication connection between the apparatuses or units may be implemented in an electrical form, a mechanical form, or another form.

The units described as separate parts may or may not be physically separated, and parts displayed as units may or may not be physical units, and may be located at one location, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of the software function unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc

## Claims

1. A traffic forwarding method, comprising:
when a restart device in a network enters a restart state, updating (S401), by a neighbor device of the restart device from first routing information to second routing information, routing information used to forward target traffic, wherein the first routing information indicates the neighbor device to send the target traffic to the restart device, and the second routing information indicates the neighbor device to send the target traffic to another device; and
forwarding (S402), by the neighbor device, the target traffic based on the second routing information,
wherein the updating, by a neighbor device of the restart device from first routing information to second routing information, routing information used to forward target traffic specifically comprises:
adjusting, by the neighbor device, a priority of the first routing information and/or a priority of the second routing information, to enable the priority of the second routing information to be higher than the priority of the first routing information,
wherein after the updating, by a neighbor device of the restart device from first routing information to second routing information, routing information used to forward target traffic, the method further comprises:
sending, by the neighbor device, a notification message to a neighbor device of the neighbor device, wherein the notification message indicates that the priority of the second routing information is higher than the priority of the first routing information.

2. The method according to claim 1, wherein before the updating, by a neighbor device of the restart device from first routing information to second routing information, routing information used to forward target traffic, the method further comprises:
obtaining, by the neighbor device, the second routing information.

3. The method according to claim 2, wherein the obtaining, by the neighbor device, the second routing information specifically comprises:
selecting, by the neighbor device, one piece of routing information from candidate routing information in a local routing table as the second routing information, wherein
the candidate routing information is the routing information used to forward the target traffic, and the candidate routing information does not comprise the first routing information.

4. The method according to claim 3, wherein the selecting, by the neighbor device, one piece of routing information from candidate routing information in a local routing table as the second routing information specifically comprises:
using, by the neighbor device, routing information with a highest priority in the candidate routing information in the local routing table as the second routing information.

5. The method according to claim 1, wherein the adjusting, by the neighbor device, a priority of the first routing information and/or a priority of the second routing information specifically comprises:
modifying, by the neighbor device, a value of a first parameter corresponding to the first routing information, and/or a value of a first parameter corresponding to the second routing information, wherein the first parameter indicates a priority of the routing information.

6. The method according to claim 5, wherein
the first parameter comprises any one of a multi exit discriminator, a protocol preference value, or an autonomous system path.

7. The method according to claim 1, wherein the adjusting, by the neighbor device, a priority of the first routing information and/or a priority of the second routing information specifically comprises:
adding, by the neighbor device, identification information to the first routing information, wherein the identification information indicates that the first routing information is routing information with a low priority.

8. The method according to claim 7, wherein the adding, by the neighbor device, identification information to the first routing information specifically comprises:
extending, by the neighbor device, a value of a second parameter corresponding to the first routing information, wherein an extended value of the second parameter is the identification information added in the first routing information, and the second parameter comprises a community attribute parameter or an extended community attribute parameter.

9. The method according to claim 1, wherein the method further comprises:
after the restart device is successfully restarted and the neighbor device receives routing information advertised by the restart device, updating, by the neighbor device from the second routing information to the first routing information, the routing information used to forward the target traffic; and
forwarding, by the neighbor device, the target traffic based on the first routing information.

10. A traffic forwarding device, wherein the traffic forwarding device is configured to implement any method of the claims 1 to 9.

## Patentansprüche

1. Verkehrweiterleitungsverfahren, das umfasst:
wenn eine Neustartvorrichtung in einem Netzwerk in einen Neustartzustand wechselt, Aktualisieren (S401), durch eine Nachbarvorrichtung der Neustartvorrichtung von ersten Routing-Informationen zu zweiten Routing-Informationen, von Routing-Informationen, die verwendet werden, um den Zielverkehr weiterzuleiten, wobei die ersten Routing-Informationen der Nachbarvorrichtung angeben, den Zielverkehr an die Neustartvorrichtung zu senden, und die zweiten Routing-Informationen der Nachbarvorrichtung angeben, den Zielverkehr an eine andere Vorrichtung zu senden; und
Weiterleiten (S402), durch die Nachbarvorrichtung, des Zielverkehrs basierend auf den zweiten Routing-Informationen,
wobei das Aktualisieren, durch eine Nachbarvorrichtung der Neustartvorrichtung von ersten Routing-Informationen zu zweiten Routing-Informationen, von Routing-Informationen, die verwendet werden, um den Zielverkehr weiterzuleiten, umfasst:
Anpassen, durch die Nachbarvorrichtung, einer Priorität der ersten Routing-Informationen und/oder einer Priorität der zweiten Routing-Informationen, um zu ermöglichen, dass die Priorität der zweiten Routing-Informationen höher als die Priorität der ersten Routing-Informationen ist,
wobei nach dem Aktualisieren, durch eine Nachbarvorrichtung der Neustartvorrichtung von ersten Routing-Informationen zu zweiten Routing-Informationen, von Routing-Informationen, die verwendet werden, um den Zielverkehr weiterzuleiten, das Verfahren ferner umfasst:
Senden, durch die Nachbarvorrichtung, einer Benachrichtigungsnachricht an eine Nachbarvorrichtung der Nachbarvorrichtung, wobei die Benachrichtigungsnachricht angibt, dass die Priorität der zweiten Routing-Informationen höher ist als die Priorität der ersten Routing-Informationen.

2. Verfahren nach Anspruch 1, wobei vor dem Aktualisieren, durch eine Nachbarvorrichtung der Neustartvorrichtung von ersten Routing-Informationen zu zweiten Routing-Informationen, von Routing-Informationen, die verwendet werden, um den Zielverkehr weiterzuleiten, das Verfahren ferner umfasst:
Erhalten, durch die Nachbarvorrichtung, der zweiten Routing-Informationen.

3. Verfahren nach Anspruch 2, wobei das Erhalten, durch die zweite Nachbarvorrichtung, der zweiten Routing-Informationen speziell umfasst:
Auswählen, durch die Nachbarvorrichtung, einer Routing-Information aus Kandidaten-Routing-Informationen in einer lokalen Routing-Tabelle als die zweiten Routing-Informationen, wobei
die Kandidaten-Routing-Informationen die Routing-Informationen sind, die verwendet werden, um den Zielverkehr weiterzuleiten, und die Kandidaten-Routing-Informationen die ersten Routing-Informationen nicht umfassen.

4. Verfahren nach Anspruch 3, wobei das Auswählen, durch die Nachbarvorrichtung, einer Routing-Information aus Kandidaten-Routing-Informationen in einer lokalen Routing-Tabelle als die zweiten Routing-Informationen speziell umfasst:
Verwenden, durch die Nachbarvorrichtung, von Routing-Informationen mit einer höchsten Priorität in den Kandidaten-Routing-Informationen in der lokalen Routing-Tabelle als die zweiten Routing-Informationen.

5. Verfahren nach Anspruch 1, wobei das Anpassen, durch die Nachbarvorrichtung, einer Priorität der ersten Routing-Informationen und/oder einer Priorität der zweiten Routing-Informationen speziell umfasst:
Ändern, durch die Nachbarvorrichtung, eines Werts eines ersten Parameters, der den ersten Routing-Informationen entspricht, und/oder eines Werts eines ersten Parameters, der den zweiten Routing-Informationen entspricht, wobei der erste Parameter eine Priorität der Routing-Informationen angibt.

6. Verfahren nach Anspruch 5, wobei
der erste Parameter ein beliebiges von einem Multi-Exit-Diskriminator, einem Protokollpräferenzwert oder einem autonomen Systempfad umfasst.

7. Verfahren nach Anspruch 1, wobei das Anpassen, durch die Nachbarvorrichtung, einer Priorität der ersten Routing-Informationen und/oder einer Priorität der zweiten Routing-Informationen speziell umfasst:
Hinzufügen, durch die Nachbarvorrichtung, von Identifikationsinformationen zu den ersten Routing-Informationen, wobei die Identifikationsinformationen angeben, dass die ersten Routing-Informationen Routing-Informationen mit einer niedrigen Priorität sind.

8. Verfahren nach Anspruch 7, wobei das Hinzufügen, durch die Nachbarvorrichtung, von Identifikationsinformationen zu den ersten Routing-Informationen speziell umfasst: Erweitern, durch die Nachbarvorrichtung, eines Werts eines zweiten Parameters, der den ersten Routing-Informationen entspricht, wobei ein erweiterter Wert des zweiten Parameters die Identifikationsinformationen, die den ersten Routing-Informationen hinzugefügt werden, sind und der zweite Parameter einen Community-Attributparameter oder einen erweiterten Community-Attributparameter umfasst.

9. Verfahren nach Anspruch 1, wobei das Verfahren ferner umfasst:
nachdem die Neustartvorrichtung erfolgreich neu gestartet wurde und die Nachbarvorrichtung die durch die Neustartvorrichtung angekündigten Routing-Informationen empfängt, Aktualisieren, durch die Nachbarvorrichtung von den zweiten Routing-Informationen zu den ersten Routing-Informationen, der Routing-Informationen, die verwendet werden, um den Zielverkehr weiterzuleiten; und
Weiterleiten, durch die Nachbarvorrichtung, des Zielverkehrs basierend auf den ersten Routing-Informationen.

10. Verkehrsweiterleitungsvorrichtung, wobei die Verkehrsweiterleitungsvorrichtung konfiguriert ist, um eines der Verfahren der Ansprüche 1 bis 9 zu implementieren.

## Revendications

1. Procédé d'acheminement de trafic, comprenant :
lorsqu'un dispositif de redémarrage dans un réseau entre dans un état de redémarrage, la mise à jour (S401), par un dispositif voisin du dispositif de redémarrage, de premières informations de routage vers de secondes informations de routage, d'informations de routage utilisées pour acheminer un trafic cible, dans lequel les premières informations de routage indiquent au dispositif voisin d'envoyer le trafic cible au dispositif de redémarrage, et les secondes informations de routage indiquent au dispositif voisin d'envoyer le trafic cible à un autre dispositif ; et
l'acheminement (S402), par le dispositif voisin, du trafic cible sur la base des secondes informations de routage,
dans lequel la mise à jour, par un dispositif voisin du dispositif de redémarrage de premières informations de routage vers de secondes informations de routage,
d'informations de routage utilisées pour acheminer un trafic cible comprend spécifiquement :
le réglage, par le dispositif voisin, d'une priorité des premières informations de routage et/ou d'une priorité des secondes informations de routage, pour permettre à la priorité des secondes informations de routage d'être plus élevée que la priorité des premières informations de routage,
dans lequel, après la mise à jour, par un dispositif voisin du dispositif de redémarrage de premières informations de routage vers de secondes informations de routage,
d'informations de routage utilisées pour acheminer un trafic cible, le procédé comprend en outre :
l'envoi, par le dispositif voisin, d'un message de notification à un dispositif voisin du dispositif voisin, dans lequel le message de notification indique que la priorité des secondes informations de routage est plus élevée que la priorité des premières informations de routage.

2. Procédé selon la revendication 1, dans lequel avant la mise à jour, par un dispositif voisin du dispositif de redémarrage de premières informations de routage vers de secondes informations de routage, d'informations de routage utilisées pour acheminer un trafic cible, le procédé comprend en outre :
l'obtention, par le dispositif voisin, des secondes informations de routage.

3. Procédé selon la revendication 2, dans lequel l'obtention, par le dispositif voisin, des secondes informations de routage comprend spécifiquement :
la sélection, par le dispositif voisin, d'un élément d'informations de routage parmi des informations de routage candidates dans une table de routage locale comme seconde information de routage, dans lequel
les informations de routage candidates sont les informations de routage utilisées pour acheminer le trafic cible, et les informations de routage candidates ne comprennent pas les premières informations de routage.

4. Procédé selon la revendication 3, dans lequel la sélection, par le dispositif voisin, d'un élément d'informations de routage parmi des informations de routage candidates dans une table de routage locale comme seconde information de routage comprend spécifiquement :
l'utilisation, par le dispositif voisin, d'informations de routage à la priorité la plus élevée dans les informations de routage candidates de la table de routage locale comme secondes informations de routage.

5. Procédé selon la revendication 1, dans lequel le réglage, par le dispositif voisin, d'une priorité des premières informations de routage et/ou d'une priorité des secondes informations de routage comprend spécifiquement :
la modification, par le dispositif voisin, d'une valeur d'un premier paramètre correspondant aux premières informations de routage, et/ou d'une valeur d'un premier paramètre correspondant aux secondes informations de routage, dans lequel le premier paramètre indique une priorité des informations de routage.

6. Procédé selon la revendication 5, dans lequel
le premier paramètre comprend l'un quelconque parmi un discriminateur de sortie multiple, une valeur de préférence de protocole ou un chemin de système autonome.

7. Procédé selon la revendication 1, dans lequel le réglage, par le dispositif voisin, d'une priorité des premières informations de routage et/ou d'une priorité des secondes informations de routage comprend spécifiquement :
l'ajout, par le dispositif voisin, d'informations d'identification aux premières informations de routage, dans lequel les informations d'identification indiquent que les premières informations de routage sont des informations de routage à faible priorité.

8. Procédé selon la revendication 7, dans lequel l'ajout, par le dispositif voisin, d'informations d'identification aux premières informations de routage comprend spécifiquement :
l'extension, par le dispositif voisin, d'une valeur d'un second paramètre correspondant aux premières informations de routage, dans lequel une valeur étendue du second paramètre est l'information d'identification ajoutée dans les premières informations de routage, et le second paramètre comprend un paramètre d'attribut de communauté ou un paramètre d'attribut de communauté étendu.

9. Procédé selon la revendication 1, dans lequel le procédé comprend en outre :
après que le dispositif de redémarrage a été redémarré avec succès et que le dispositif voisin reçoit des informations de routage annoncées par le dispositif de redémarrage, la mise à jour, par le dispositif voisin des secondes informations de routage vers les premières informations de routage, des informations de routage utilisées pour acheminer le trafic cible ; et
l'acheminement, par le dispositif voisin, du trafic cible sur la base des premières informations de routage.

10. Dispositif d'acheminement de trafic, dans lequel le dispositif d'acheminement de trafic est configuré pour mettre en œuvre l'un quelconque procédé selon les revendications 1 à 9.
